# EUROPÄISCHE PATENTANMELDUNG

(11) **EP 1 258 380 A2**
(43) Veröffentlichungstag der Anmeldung: **20.11.2002**
(21) Anmeldenummer: 02009971.9
(22) Anmeldetag: 03.05.2002
(51) Int. Cl.: B60K 1/04

(54) **Verriegelung für ein Batteriefach**

(30) Priorität: 16.05.2001 DE 10123783
(71) Anmelder: Still & Saxby S.à.r.l., 77107 Meaux-Cedex (FR)
(72) Erfinder: Abonnet, Jacqes, St. Laurent, 58200 Cosne/Loire (FR); Boulant, Yann, 60300 Senlis (FR)
(74) Vertreter: Lang, Michael (DE)

(57) **Zusammenfassung**

Gegenstand der Erfindung ist ein Batteriefach für ein Flurförderzeug mit einer Tür (2), die das Batteriefach vorzugsweise in seitlicher Richtung abschließt und einer durch einen Schlüssel (1) betätigbaren Verriegelungsvorrichtung. Dabei kann der Schlüssel (1) nur dann aus der Verriegelungsvorrichtung entfernt werden kann, wenn die Tür (2) des Batteriefachs vollständig verriegelt oder vollständig entriegelt ist.

## Beschreibung

Die Erfindung betrifft ein Batteriefach für ein Flurförderzeug mit einer Tür, die das Batteriefach vorzugsweise in seitlicher Richtung abschließt und einer durch einen Schlüssel betätigbaren Verriegelungsvorrichtung.

Flurförderzeuge der genannten Art besitzen einen Antriebsteil, in dem sich die Antriebsaggregate, ein Antriebsrad und Bedienelemente des Flurförderzeugs befinden, sowie einen Lastteil mit einer Lastaufnahmevorrichtung, der relativ zu dem Antriebsteil anhebbar ist.

In dem Antriebsteil oder in dem Lastteil befindet sich ein Batteriefach für einen Batterieblock, der über die in ihm angeordneten Akkumulatoren die Aggregate des Flurförderzeugs mit elektrischer Energie versorgt. Das Batteriefach ist seitlich so durch eine mittels eines Riegels verriegelbare Tür abgeschlossen, so dass in jeder Betriebssituation, insbesondere auch in Unfallsituationen, ein Herausfallen des Batterieblocks verhindert wird. Zum Wechseln des Batterieblocks kann dieser bei geöffneter Tür in seitlicher Richtung aus dem Antriebsteil bewegt werden.

Flurförderzeuge des Standes der Technik weisen zur Verriegelung des Batteriefachs eine Tür mit einem Riegel auf, in denen sich jeweils eine Öffnung befindet. Die Riegelöffnung besitzt einen rechteckigen Querschnitt während die Türöffnung kreisförmig ausgebildet ist. Um die Tür zu verriegeln wird ein Schlüssel mit rechteckigem Querschnitt verwendet, dessen Durchmesser geringfügig kleiner als der Durchmesser der Öffnungen ist. Wird der Schlüssel herumgedreht, so kann er weiterhin in jeder Position des Riegels abgezogen werden, ohne dass eine ordnungsgemäße Ent- oder Verriegelung der Tür stattgefunden hat, da die Diagonale des Schlüsselquerschnitts immer kürzer als der Durchmesser der Türöffnung ist. Infolgedessen kann die Batterietür beim Überfahren einer Unebenheit aufspringen und der Batterieblock aus dem Batteriefach herausfallen. Dies ist unter allen Umständen zu vermeiden.

Der Erfindung liegt daher die Aufgabe zugrunde, eine Verriegelungsvorrichtung zur Verfügung zu stellen, die ein Abziehen des Schlüssels bei nicht korrekt verriegelter oder vollkommen entriegelter Tür verhindert und somit ein Aufspringen der Tür des Batteriefachs und ein mögliches Herausfallen des Batterieblocks vermeidet.

Diese Aufgabe wird erfindungsgemäß dadurch gelöst, dass der Schlüssel nur dann aus der Verriegelungsvorrichtung entfernt werden kann, wenn die Tür des Batteriefachs vollständig verriegelt oder vollständig entriegelt ist. Öffnungen in einem Riegel und in der Tür des Batteriefachs sowie der Schlüssel werden zu diesem Zweck so ausgebildet, dass die Riegelöffnung sowie der mit ihr übereinstimmende Schlüsselquerschnitt und die Türöffnung nur dann deckungsgleich sind, wenn die Tür vollkommen entriegelt oder vollkommen verriegelt ist. Somit kann der Schlüssel im Falle einer davon abweichenden Position des Riegels nicht abgezogen werden.

Es ist für die gewünschte Wirkungsweise besonders vorteilhaft, wenn der Schlüssel als Vierkantschlüssel ausgebildet ist. Ein Schlüssel dieser Art ist standardmäßig erhältlich und wird in industriellen Geräten häufig eingesetzt.

Weiterhin ist es zweckmäßig, wenn der Schlüssel zwischen dem Schlüsselgriff und einem Vierkantabschnitt einen zylindrischen Abschnitt aufweist.

Um den Schlüssel in die Verriegelungsvorrichtung einführen zu können und eine vollständige Verriegelung des Batteriefaches zu gewährleisten, weist die Verriegelungsvorrichtung einen Riegel auf, der zur Aufnahme des Schlüssels eine vierkantige Öffnung aufweist.

Aus den oben genannten Gründen ist es ebenso notwendig, dass die Tür zur Aufnahme des Schlüssels eine vierkantige Öffnung aufweist, die koaxial zur Öffnung des Riegels angeordnet ist.

Die gebräuchlichste Ausgestaltung der Erfindung wird dann erreicht, wenn die Öffnung in dem Riegel quadratisch ist

Auch die Öffnung in der Tür ist zweckmäßigerweise quadratisch.

Eine vorteilhafte Ausgestaltungsform der Erfindung wird erhalten, wenn sich der Riegel bei verriegelter Tür in einer gegenüber der Position des Riegels bei entriegelter Tür in einer um 90° gedrehten Position befindet. Üblicherweise befindet sich der Riegel bei entriegelter Tür in einer waagrechten Position und wird zum Verriegeln der Tür in eine senkrechte Position gedreht, in der dann der Schlüssel abgezogen werden kann.

Um ein Abziehen und Einführen des Schlüssels ausschließlich bei korrekt verriegelter und korrekt entriegelter Tür zu erlauben, sind die Öffnung in dem Riegel und die Öffnung in der Tür sowohl bei entriegelter als auch bei verriegelter Tür deckungsgleich.

Es ist außerdem zweckmäßig, wenn die Kantenlänge des Schlüssels geringfügig kleiner ist, als die Kantenlänge der Öffnung in dem Riegel und der Öffnung in der Tür, um ein problemloses Einführen und Abziehen des Schlüssels zu ermöglichen.

Weitere Vorteile und Einzelheiten der Erfindung werden anhand des in den schematischen Figuren dargestellten Ausführungsbeispiels näher erläutert. Dabei zeigt
- Figur 1: eine Draufsicht auf die Verriegelungsvorrichtung bei vollkommen entriegelter Tür,
- Figur 2: einen Schnitt durch die Verriegelungsvorrichtung bei vollkommen entriegelter Tür,
- Figur 3: eine Draufsicht auf die Verriegelungsrichtung in einer Zwischenstellung,
- Figur 4: einen Schnitt durch die Verriegelungsvorrichtung in einer Zwischenstellung,
- Figur 5: eine Draufsicht auf die Verriegelungsvorrichtung bei vollkommen verriegelter Tür,
- Figur 6: einen Schnitt durch die Verriegelungsvorrichtung bei vollkommen verriegelter Tür.

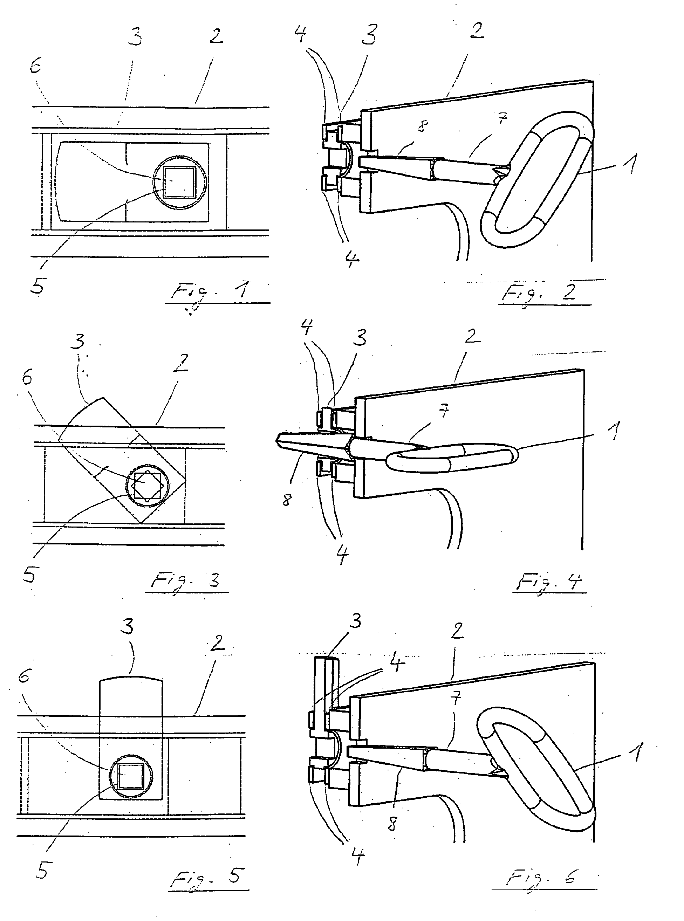

Die Figuren 1 und 2 zeigen eine erfindungsgemäße vollkommen entriegelte Verriegelungsvorrichtung in der Draufsicht (Fig. 1) und in einem senkrechten Schnitt (Fig. 2). Die an einer Tür 2 eines Batteriefaches angebrachte Verriegelungsvorrichtung weist einen sich in waagrechter Position befindlichen Riegel 3 auf, der von Führungsstücken 4 gehalten wird. In dem Riegel 3 und in der Tür 2 befinden sich eine quadratische Türöffnung 5 und eine quadratische Riegelöffnung 6, die in den betrachteten Figuren 1 und 2 deckungsgleich übereinander liegen. Ein vierkantiger Schlüssel 1 weist einen zylindrischen Abschnitt 7 und einen vierkantigen Abschnitt 8 auf. Der Schlüssel 1 wird von einer Bedienperson soweit in die Türöffnung 5 und in die Riegelöffnung 6 eingeschoben, dass sich im Bereich der Türöffnung 5 bereits der zylindrische Abschnitt 7 befindet.

Die Figuren 3 und 4 zeigen eine Verriegelungsvorrichtung gemäß der Anordnung in den Figuren 1 und 2, wobei sich der Riegel 3 in einer unerwünschten Zwischenstellung befindet. Mittels des Schlüssels 1, der sich relativ zu der Riegelöffnung 6, in der er steckt, nicht verdrehen kann, wird der Riegel 3 im Uhrzeigersinn nach oben gedreht. Wie aus Figur 3 zu ersehen ist, sind die Quadrate der Riegelöffnung 6 und der Türöffnung 5 nun nicht mehr deckungsgleich sondern um den Drehwinkel des Riegels 3 gegeneinander verdreht. Der Schlüssel 1, der mit einem Stück seines zylindrischen Abschnitts 7 in der Türöffnung 5 steckt, während der vierkantige Abschnitt 8 in der Riegelöffnung 6 steckt, kann nun höchstens bis zum Übergang von dem vierkantigen Abschnitt 8 zu dem zylindrischen Abschnitt 7 aus der Öffnung herausgezogen werden, da die Diagonale des vierkantigen Abschnitts 8 größer ist als die Seitenlänge der quadratischen Türöffnung 5.

Die Figuren 5 und 6 zeigen eine Verriegelungsvorrichtung gemäß der Anordnung in den Figuren 1 und 2, wobei der Riegel 3 im Uhrzeigersinn gegenüber der Position in Figur 3 weitergedreht wurde, so dass er sich in seiner senkrechten Endposition befindet und die Tür 2 vollkommen verriegelt ist. Somit sind auch die Riegelöffnung 6 sowie der Schlüsselquerschnitt und die Türöffnung 5 wieder deckungsgleich und der Schlüssel 1 kann aus den Öffnungen herausgezogen werden.

Es ist somit gewährleistet, dass der Schlüssel 1 nicht abgezogen werden kann, wenn die Tür 2 nicht entweder korrekt entriegelt oder verriegelt ist. Ein Aufspringen der Tür 2 und ein mögliches Herausfallen des Batterieblocks werden durch die erfindungsgemäße Verriegelungsvorrichtung vermieden.

## Patentansprüche

1. Batteriefach für ein Flurförderzeug mit einer Tür (2), die das Batteriefach vorzugsweise in seitlicher Richtung abschließt und einer durch einen Schlüssel (1) betätigbaren Verriegelungsvorrichtung, **dadurch gekennzeichnet, dass** der Schlüssel (1) nur dann aus der Verriegelungsvorrichtung entfernt werden kann, wenn die Tür (2) des Batteriefachs vollständig verriegelt oder vollständig entriegelt ist.

2. Batteriefach nach Anspruch 1, **dadurch gekennzeichnet, dass** der Schlüssel (1) als Vierkantschlüssel ausgebildet ist.

3. Batteriefach nach Anspruch 2, **dadurch gekennzeichnet, dass** der Schlüssel (1) zwischen dem Schlüsselgriff und einem vierkantigen Abschnitt (8) einen zylindrischen Abschnitt (7) aufweist.

4. Batteriefach nach einem der Ansprüche 1 bis 3, **dadurch gekennzeichnet, dass** die Verriegelungsvorrichtung einen Riegel (3) aufweist, der zur Aufnahme des Schlüssels (1) eine vierkantige Öffnung aufweist.

5. Batteriefach nach Anspruch 4, **dadurch gekennzeichnet, dass** die Tür (2) zur Aufnahme des Schlüssels (1) eine vierkantige Öffnung aufweist, die koaxial zur Öffnung des Riegels (3) angeordnet ist.

6. Batteriefach nach Anspruch 4, **dadurch gekennzeichnet, dass** die Öffnung in dem Riegel (3) quadratisch ist.

7. Batteriefach nach Anspruch 5, **dadurch gekennzeichnet, dass** die Öffnung in der Tür (2) quadratisch ist.

8. Batteriefach nach einem der Ansprüche 1 bis 7, **dadurch gekennzeichnet, dass** sich der Riegel (3) bei verriegelter Tür (2) in einer gegenüber der Position des Riegels (3) bei entriegelter Tür (2) in einer um 90° gedrehten Position befindet.

9. Batteriefach nach einem der Ansprüche 1 bis 8, **dadurch gekennzeichnet, dass** die Öffnung in dem Riegel (3) und die Öffnung in der Tür (2) sowohl bei entriegelter als auch bei verriegelter Tür (2) deckungsgleich sind.

10. Batteriefach nach einem der Ansprüche 1 bis 9, **dadurch gekennzeichnet, dass** die Kantenlänge des Schlüssels (1) geringfügig kleiner ist, als die Kantenlänge der Öffnung in dem Riegel (3) und der Öffnung in der Tür (2).
